# EUROPEAN PATENT APPLICATION

(11) **EP 4 631 351 A1**
(43) Date of publication of application: **15.10.2025**
(21) Application number: 24020264.8
(22) Date of filing: 10.08.2024
(51) Int. Cl.: A01K 7/02, A01K 5/01

(54) **PET-POWER DOUBLE BUZZ-BOWL**

(30) Priority: 08.12.2023 US 202318533499
(62) Divisional of application: 24213904.6
(71) Applicant: Hicks, Anton, Torquay TQ2 5TN (GB)
(72) Inventor: Hicks, Anton, Torquay TQ2 5TN (GB)

(57) **Abstract**

The system provides a way for pets to communicate their desire for water or food when the owner is in the same room or in the next house. In the central space of a double pet bowl platform surface, a pet can press either of two buttons to alert the owner that it requires water or food. The waterproofed buttons are linked to speakers on the side of central area. For the owner to be contacted up to 100 meters away, a radio frequency transmitter is just to the side behind the speakers. A receiver doubling as a key-ring is supplied. The bowl and the key-ring have the same distinguishing sounds and lights for water and for food. The key-ring receiver can be turned off.

## Description

### FIELD OF THE INVENTION

This invention pertains to a pet hydration and communication system that encompasses any materialled double or twin pet bowl whose middle section could have two pet-operated buttons. It allows pets to actively communicate thirst and hunger to owners through distinct colours, and sounds and vibrations produced by the lights, buzzers or speakers on the bowl. And - corresponding to the colours and sounds - a receiver notifies owners up to 100m away.

### BACKGROUND OF THE INVENTION

The background description includes information that is useful in understanding the present invention. It is not an admission that any of the information provided here is prior art.

Over the last four years, YouTube and FB has had videos of dogs and cats interacting with buzzers to request food with millions of views and overwhelmingly positive comments. But these videos do not address pets' ability to request water (or food) via their bowl.

And like glass mirrors were invented in 1835, and cars in 1886 - yet recent patents protect mirrors on and in cars- there is difference in my buzzer being on a (double) bowl.

The environmental impact for meat-rich wet pet food has been reported to cause eight times more emissions than dry food. This environmental concern is reflected in a headline from The Guardian in November 2022 which talks about the carbon footprint of pets. So, pet owners are slowly switching to drier food options, which can lead to more pet dehydration.

This trend of providing dry food, along with hotter weather and our increasingly distracted lifestyles, underscores the need for innovative solutions to tackle pet dehydration.

The inventor recalls being reminded by his father as a child to ensure his dog had water. And 40 years later, he found himself reminding his own family members to attend to their pet's hydration. Often pets can't communicate their needs. Hence, the conception of a solution.

While searching for existing products in the market, including on online marketplaces like Amazon, Alibaba, Walmart, and pet-focused stores like Petco and Petsmart, as well as patent databases like the UK's IPO, USPTO, Espacenet, and specialized search platforms like PQAI, no product similar to the Pet-Power Double Buzz-Bowl was found. The closest results found bowls with mechanisms to notify the owner when the bowl is empty or it's time for a pet to be fed. Sophisticated as some of these bowls are, they cater just for the owner. Others allow pets to operate gadgets to get food from bowls. None with any electronic or electric parts integrated into the bowl consider the pet's direct communication in the process between itself and its owner. Today's bowl creates that connection.

The Pet-Power Bell-Bowl submitted by today's inventor to the USPTO 8^{th} Nov 2023 is an exception to the previous point; it gives pets agency by allowing them to push or pull a lever to ring a bell in the rim of a bowl to call the owner. But that invention is purely mechanical.

### DESCRIPTION OF THE DRAWINGS

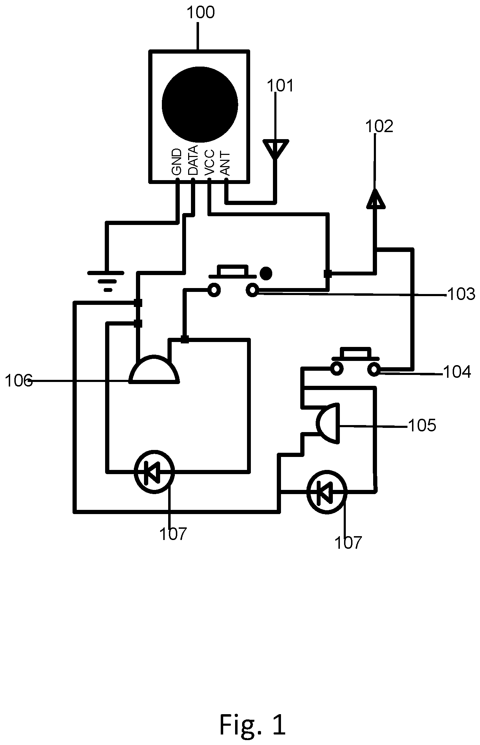

Fig.1 illustrates a schematic view of the transmitter circuit (TX), in accordance with an embodiment of the present disclosure.

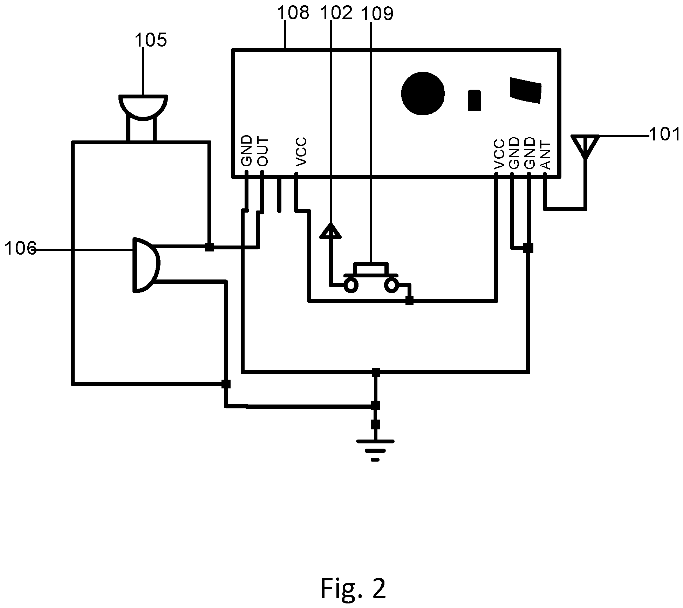

Fig.2 illustrates a schematic view of the receiver circuit (RX), in similar accordance.

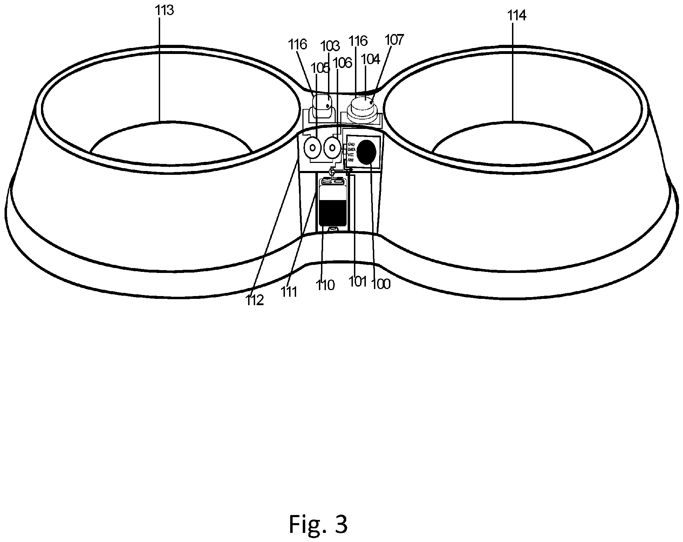

Fig.3 is a side-top view of the Double Buzz-Bowl, in accordance with an embodiment of the present disclosure showing the two bowls aside the central space with squared food, and round water buttons atop with their LEDs, the TX (uncovered) and speakers down the side, and the battery (uncovered) in its housing underneath. Fig.3 can accompany a published abstract.

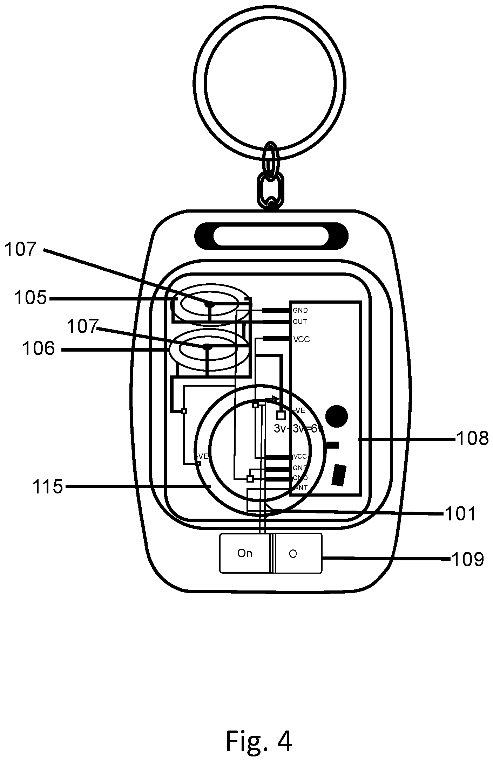

Fig.4 is an inside view of the RX including its batteries and speakers in accordance with an embodiment of the present disclosure. The receiver is seen to double as a key ring.

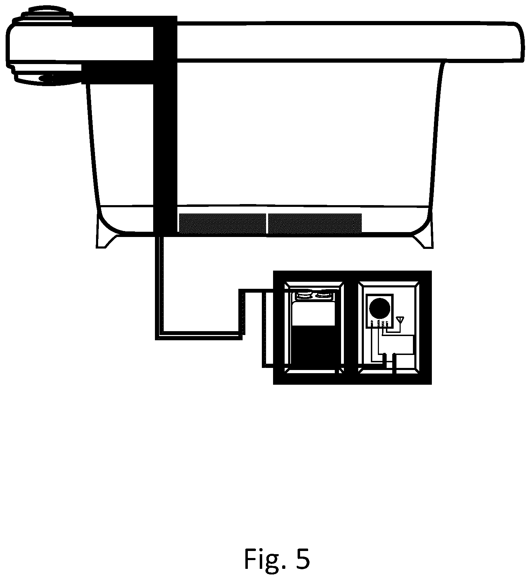

Fig.5 illustrates an embodiment of the double bowl with its buttons, buzzers, LED lights and transmitter. Namely, a single bowl with its button, buzzer, LED light and transmitter. The single bowl may be without its transmitter. If without, a buzz would only be on the bowl.

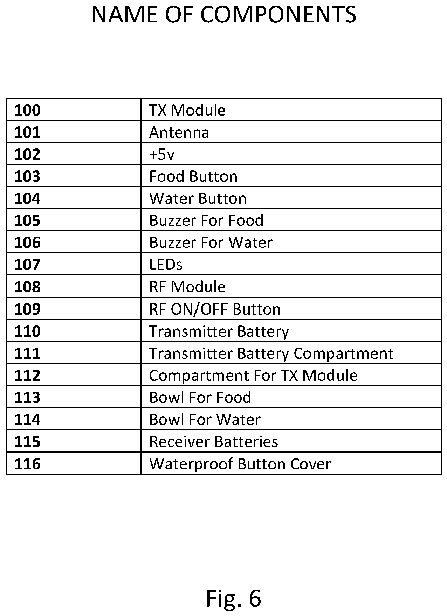

Fig.6 is a listing of the parts of that make up the Double Buzz-Bowl, the "Components."

Elements in the drawings may not be scale. They may show only details pertinent to understanding the embodiments of the invention so as not to obscure the drawings with details readily apparent to those of ordinary skill in the art having benefit of the descriptions. In language about to be used, no limitation of the scope of the invention is thereby intended.

### DESCRIPTION OF THE INVENTION

On the central space of a double pet-bowl surface, a pet can press either of two waterproofed buttons to alert the owner that it requires water or food. The pressed buttons initiate an electrical circuit inside the central cavity. Wires connect the buttons to a 433MHz RF transmitter module (TX) that transforms physical inputs (the button-press) into wireless signals. While the buttons are linked to speakers on the side of central area, simultaneously, a wire antenna attached to the TX transmitter module enhances signal transmission through the air for the owner to be contacted up to 100 meters away. Under the speakers and TX module, but 2 inches above the floor, a - preferably - 9v battery is housed to power the system. (Whilst 2 inches is minimum, many so-called 'twin,' 'dual' or 'double' bowls are elevated. So, the distance of the housing from the floor could be 1 or 2 feet.) A receiver module (RX), doubling as a key-ring, is supplied. The 433MHz RF receiver module is set inside the key-ring body. The receiver constantly scans for signals at the 433MHz frequency. So, it is permanently poised to intercept incoming transmissions (sent by the TX). Once received, a buzzer generates an audible alert. The buzzer sounds for 10 seconds then automatically deactivates. Adequate, long-lasting batteries power the system. There will be two speakers on the RX. Each button on the double bowl centre will initiate a different frequency, thus a different sound on the double bowl's speakers. RX speakers will also have a different sound but similar to their corresponding speaker on the double bowl. The speakers will vibrate for 10 seconds and an LED light identical to that of the bowl will shine for the same time. Since cats and dogs both see blue and yellow, the water and food lights are blue and yellow respectively. If inconvenient, the key-ring's lights and vibrating speakers can be turned off. While on, however, even a deaf, noisy, or super-busy person can be aware their pet is trying to call them. Even a blind person, if away from their dog - as long as they're within 100 meters - with this pet power they will never feel apart.

As part of a single inventive concept, in an embodiment, instead of two buttons between the rims, the invention provides a single button on the rim of a single bowl. (Illustration 5.) A profile view of the Pet-Power Buzz-Bowl (same title but without the word 'Double') shows the button atop the rim, the buzzer and LED light under the rim, wire insulation and its protective sheath down the outside, and battery and TX (for clarity, drawn out of the bowl). The black block inside an added bottom of the bowl holds the battery and TX. The utility of this single bowl is similar to the double bowl. Namely, communication about food or water or any treat from pet to owner using a single button, buzzer and LED light (instead of two buttons, buzzers and LED lights) and TX to a single speaker RX (instead of to two speakers RX). Potential problems with this embodiment, however, include the a) cost -- special bowls would have to be manufactured, b) sustainability - they'd have to be (recycled) plastic, c) stability -- when pets press down, some bowls would topple over, and a stabilizer is an extra cost and encumbrance while collecting the floor's debris, d) frustration -- once pets become adept with the one buzzer, they'd want - and owners may feel they'd have to buy - a second).

In an embodiment of the single bowl (the Pet-Power Buzz-Bowl), the invention provides an accessible button on the side for a pet to paw or nose to activate the buzzer.

In an embodiment, the invention provides cord/chain between two points 6 to 60 mm apart on the side of the Pet-Power Buzz-Bowl which pets could pull on to activate the buzzer.

In an embodiment, the invention provides a lever atop the rim of the Pet-Power Buzz-Bowl instead of the button, or on the side, for the pet to push or pull to activate the buzzer.

In an embodiment, the invention provides two levers instead of buttons atop the surface of the Pet-Power Double Buzz-Bowl for the pet to push or pull for buzzer-activation.

While the primary purpose of a single or double buzzer is to signal the need for water or food, smarter pets can be taught to buzz for more: a very competent, confident pet might be trained to buzz twice when he needs to go outside, or three times for a specific bone or toy.

In the context of the Pet-Power Double Buzz-Bowl's patent specification, an introduction referencing Ivan Pavlov's classical conditioning experiments and its relevance to pet behavior is provided. The specification gives an idea of how pet owners may train their pet to use the Double Buzz-Bowl. Although not in formal language, the inventor wanted to share what he hopes show to manufacturers or investors.

### POSSIBLE INSTRUCTIONS

From your school biology, you may recall the 19^{th} century Russian physiologist-turned-psychologist, Pavlov. When his assistant rang a bell and fed the dogs, they salivated. Soon, just hearing the assistant approaching, they salivated without the buzzer or food. Pavlov had conditioned them. Now, your pet will condition you! When he or she buzzes, you come. Of course, there'll be buzzes to which you won't respond. Inconvenient. You don't respond every time a friend calls. They still call. Just be consistent with your pet.

Training your pet - let's call him Bruno - to use the Pet-Power Double Buzz-Bowl is a simple and rewarding process. It can be used for water and food. Does Bruno have dried food? Do the kids forget to check the water bowl? Imagine you've just enjoyed Bombay Mix, beef jerky, and chips. But no drink. And you don't know how to ask for one. Now, imagine that feeling all summer's day. It's real discomfort leading to danger. So, let's do Bruno's water fi rst.

SETUP: The water and food buttons deliver different tones to the speakers, but correspond to your key-chain speakers. Get used to the water speaker sound as that'll be Bruno's first button. Ensure the double bowl is where Bruno usually finds his water & food - especially his water. ENCOURAGE INTERACTION: Let Bruno approach the bowl to explore it alone for a while. POSITIVE REINFORCEMENT: On the water button, gently place Bruno's paw. If unsure which, just know that male cats and dogs usually use their left paw; females, their right. And we've made the button next to the water bowl blue because that's one of the few colours cats, dogs, and birds see; their other main colour is yellow - the food button. Of course, they see shapes. So, the water button is like a round drop. And the food button is squarish, like a chunk of food. Guide Bruno to press the water button. The buzzer will buzz. Immediately reward him by saying "Good boy" and immediately provide fresh water or his favourite drink in the bowl. Bruno always tries to learn from your reactions. If you don't act "immediately," then you're already doing something else and, as far as Bruno knows, you're reacting to that. Very confusing! So, do as Pavlov did. Give Bruno a simple association: *"Dry bowl, I buzz, human fills."* (It's tempting to give Bruno a treat when he buzzes. Careful. You could be training him to be disappointed when - in the future - he doesn't get a treat after buzzing, just gets water.)

REINFORCE: Repeat this process several times over 2 or 3 days to establish the association. Don't completely fill a large bowl in each time, then you can return. Once he's trained, fill it. For now, if he presses the food buzzer, don't say anything. Ignore it. Always use the same bowl the same side of the unit for water, and the other one for food. Apart from the round blue button and blue LED light next to the water bowl - and the rounded square yellow button and yellow LED next to the food bowl - to help you and Bruno, there are round blue shapes printed on or around the water bowl, and yellow squares on the food one coming from the buttons. LED lights and vibrating speakers on your key-ring correspond with the bowl's lights & sounds. ADDRESSING OVERUSE: If Bruno starts to ring the bell excessively or just for attention, look at the bowl, calmly say "No," turn your back, and immediately resume your previous activity. Now, there's another association or bit of conditioning: *"Rejection if I abuse human!"*

If you leave your pet alone for extended periods, it's your responsibility to ensure they have access to water. Eventually, whole new level of trust and communication will develop. And, like the experts keep telling us not to forget to have enough water, Bruno won't allow you to forget to water him. Now he is comfortable with the water button, at feeding time, repeat the training and this Pet-Power Double Buzz-Bowl will give Bruno double the buzz.

## Claims

1. A pet double bowl set comprising:
a. one or more actuating devices, like buttons or levers, integrated into the bowl set's body;
b. one or more devices integrated into the bowl set's body that may or may not provide different sounds for food or water;
c. one or more visual alerts integrated into the bowl set's body that may or may not show different colours for food or water;
d. an RF Transmitter Module, such as a 433MHz transmitter;
e. an antenna to optimize signal propagation;
f. a power source, typically a 9V battery;
g. a receiver such as a 433MHz Receiver Module that might double, for instance, as a key-ring;
h. one or more speakers on the receiver (RX) that may vibrate and possibly provide different sounds for food or water similar to the corresponding sounds on the bowl;
i. one or more visual alerts on the RX that may or not show different colours for food or water;
j. a power source, using two or three 3v batteries such as CR2032 Button Battery in the RX;
k. an on/off switch for the receiver as a whole or a switch just for the visual alert and a switch just for the vibrating sound alert.

2. The pet hydration device of claim 1, wherein on the body of a single pet bowl is a single actuating device, for instance a button, lever or chain, with a buzzer or speaker and LED light on the bowl's body, while shielded insulated wires go down the outside of the bowl to, for example, a 433MHz TX Module.

3. The pet hydration of claim 1, namely, the double pet bowl, without the TX.

4. The pet hydration of claim 1, namely, the single pet bowl, without the TX.

## Amended claims

### Amended claims in accordance with Rule 137(2) EPC.

1. A pet double bowl set comprising:
a. one or more actuating devices, (103, 104), preferably buttons or levers, integrated into the bowl set's body;
b. one or more devices (105, 106) integrated into the bowl set's body in particular configured to provide different sounds for food or water;
c. one or more visual alerts (107) integrated into the bowl set's body in particular configured to show different colors for food or water;
d. an RF Transmitter Module (100), preferably a 433MHz transmitter;
e. an antenna (101) for optimizing signal propagation;
f. a power source (110), preferably a 9V battery;
g. a receiver (108) preferably a 433MHz Receiver Module in particular doubling as a key-ring;
h. one or more speakers (105, 106) on the receiver (RX) preferably configured to vibrate and provide different sounds for food or water similar to the corresponding sounds on the bowl;
i. one or more visual alerts (107) on the RX in particular configured to show different colors for food or water;
j. a power source (115), using two or three 3v batteries, preferably CR2032 Button Batteries, in the receiver RX;
k. an on/off switch for the receiver (109) as a whole or a switch just for the visual alert and a switch just for the vibrating sound alert.

2. The pet bowl device of claim 1, wherein on the body of a single pet bowl is a single actuating device, preferably a button or lever, with a buzzer or speaker and LED light connected to a 433MHz TX Module on the bowl's body.

3. The pet double bowl of claim 1, comprising a), b), c) and f).

4. The pet bowl of claim 1, namely, a single pet bowl, comprising a), b), c) and f).
